# EUROPÄISCHE PATENTSCHRIFT

(11) **EP 0 911 922 B1**
(45) Veröffentlichungstag und Bekanntmachung des Hinweises auf die Patenterteilung: **11.09.2002**
(21) Anmeldenummer: 98120243.5
(22) Anmeldetag: 26.10.1998
(51) Int. Cl.: H01S 3/03, H01S 3/08, H01S 3/0975, H01S 3/07

(54) **Laserresonator**
Laser resonator
Résonateur laser

(30) Priorität: 24.10.1997 DE 19747060
(43) Veröffentlichungstag der Anmeldung: 28.04.1999
(73) Patentinhaber: TRUMPF LASERTECHNIK GmbH, D-71254 Ditzingen (DE)
(72) Erfinder: Schlüter, Holger, 70197 Stuttgart (DE)
(74) Vertreter: Rank, Christoph

(56) Entgegenhaltungen:
- WO-A-92/01322
- WO-A-96/42128
- DE-A- 4 421 600
- GB-A- 2 244 851
- US-A- 4 598 408

## Beschreibung

### Technisches Gebiet

Die Erfindung bezieht sich auf einen Laserresonator mit einem ersten und einem zweiten Endspiegel und mit koaxialen Elektroden, zwischen denen in Richtung einer Symmetrieachse des Laserresonators hin- und herreflektierte Laserstrahlung ein Resonatorvolumen ringförmigen Querschnitts abschnittweise azimutal durchläuft.

Derartige Resonatoren mit koaxialer Entladungsstruktur werden herkömmlich für Hochleistungslaser, d.h. für Laser mit einer Laserleistung bis zu mehreren kW, und insbesondere für Gaslaser, wie CO₂-Laser eingesetzt.

### Stand der Technik

Ein Laserresonator mit ringförmigem Querschnitt, von dem bei der Formulierung des Oberbegriffs des Patentanspruchs 1 ausgegangen wird, ist in der DE 41 23 024 C2 beschrieben. Dieser Laserresonator weist kreiszylindrische Elektroden auf, die koaxial angeordnet sind, und an deren Enden zwei einander zugewandte Spiegel vorgesehen sind, zwischen denen die Laserstrahlung in der oben beschriebenen Weise die Symmetrieachse des Resonators azimutal umläuft.

Dabei kann insbesondere einer der Endspiegel mit der inneren Elektrode direkt verbunden bzw. einteilig gefertigt sein, so daß lediglich die Außenelektrode und der andere Endspiegel justiert werden müssen.

Daneben sind weitere Resonatoren mit ringförmigen Querschnitt bekannt, bei denen zwei oder mehr Spiegel relativ zu den Elektroden und relativ zueinander zu justieren sind. Hierzu wird exemplarisch auf die DE 41 20 530 C2 oder die US-PS 5,353,299 verwiesen.

Auch bei den aus diesen Druckschriften bekannten Lasem läuft die Strahlung azimutal um. Die Unterschiede zwischen den aus den vorstehend genannten Druckschriften bekannten Lasern bzw. Laserresonatoren liegen im wesentlichen in der Gestaltung der Endspiegel und in der Weise, wie der Laserstrahl ausgekoppelt wird.

Aus der DE 44 21 600 A1 ist ein koaxialer Laser anderer Gattung bekannt, der einen Laserstrahl mit ringsektorförmigen Querschnitt erzeugt. Bei diesem bekannten Laser sind zusätzlich zu den beiden Endspiegeln weitere Spiegel erforderlich, die den Laserstrahl formen. Entsprechend aufwendig ist die Justierung des Lasers.

Aus der DE 44 24 726 C1 ist ein koaxialer Laser mit einem stabilen Resonator bekannt, bei dem über eine sehr komplizierte Spiegelanordnung die Laserstrahlung so geführt wird, daß zentral ein zumindest annähernd homogener Laserstrahl austritt.

Nachteilig an sämtlichen vorstehend beschriebenen Resonatoren ist, daß der Strahlverlauf im Resonatorvolumen sehr empfindlich von der exakten Justierung sämtlicher das Resonatorvolumen begrenzenden Komponenten abhängt. Selbst in dem Fall, daß nur ein einziger Spiegel justiert zu werden braucht, führt jede noch so geringe Winkelabweichung zu einem deutlich dezentrierten Stahlengang und somit zu einer mangelhaften Strahlqualität. Die Sicherstellung einer ausreichenden Strahlqualität wird durch die obigen Justierprobleme sowie durch den Einsatz zusätzlicher Faltungsspiegel häufig erschwert, wenn nicht gar verhindert.

### Darstellung der Erfindung

Es ist Aufgabe der Erfindung, einen gattungsgemäßen Laserresonator derart weiterzubilden, daß er weitgehend justageunempfindlich ist und sich daher - ggf. trotz des Einsatzes weiteren Faltungsspiegel - ohne Gefährdung oder Einbuße an Strahlqualität falten läßt.

Diese Aufgabe wird erfindungsgemäß dadurch gelöst, daß der zweite Endspiegel ein im wesentlichen konischer Spiegel ist, der auftreffende Laserstrahlung jeweils in azimutal gegenüberliegende Bereiche des Resonatorvolumens umlenkt.

Ausbildungen des Erfindung sind in den Ansprüchen 1-16 definiert.

Die Laserstrahlung, die zwischen den Reflexionen durch den ersten und den zweiten Endspiegel eine senkrecht zur optischen Achse orientierte ringförmige Querschnittsfläche passiert und entlang dieses Rings im Laufe der Zeit azimutal um die im Ringmittelpunkt gelegene Symmetrieachse läuft, trifft auf einen entsprechenden ringförmigen Abschnitt des erfindungsgemäßen konischen zweiten Endspiegels, der die jeweils auftreffende Laserstrahlung zunächst in etwa rechtem Winkel zur optischen Achse hin und dadurch in den azimutal gegenüberliegenden, um etwa 180° verdreht befindlichen Bereich der ringförmigen Auftrefffläche reflektiert und dort durch eine zweite Reflexion in Richtung des ersten Endspiegels zurücklenkt. Wesentlich ist dabei, daß der zweifach umgelenkte Strahl - ggf. bis auf die azimutale Strahlneigung, die zum Umlauf des Strahls erforderlich ist - unter demselben Winkel zurückkehrt, unter dem er vorher auf dem konischen Spiegel auftrifft.

Bei herkömmlichen Ringresonatoren führt jede Dejustierung eines Spiegels dazu, daß der Laserstrahl unter einem gewissen Kippwinkel und infolgedessen mit einem radialen Versatz zunächst auf den anderen Spiegel und nach Rückreflexion mit doppelten radialem Versatz wieder auf den ersten Spiegel auftrifft. Der gleiche Kippwinkel führt bei dem erfindungsgemäßen Laserresonator zunächst auch auf einen entsprechenden radialen Versatz der Auftreffpunkte des konischen Spiegels. Durch die zweifache Reflexion am konischen Spiegel mit einem Öffnungswinkel von ungefähr 45° zur optischen Achse (eine Kommentierung des exakten Öffnungswinkels erfolgt an späterer Stelle) trifft der reflektierte Laserstrahl unter dem gleichen Winkel, d.h. einem mit einem radialen Versatz Null wieder auf den ersten Spiegel, und zwar im azimutal gegenüberliegenden Bereich, auf. Durch diesen inhärenten Ausgleich etwaiger Justierungenauigkeiten wird eine hohe Strahlqualität, selbst bei einfach oder mehrfach gefaltetem Resonator, gewährleistet. Der erste Spiegel sowie der erfindungsgemäße konische zweite Spiegel können beispielsweise kreis- bzw. kegelförmig oder - insbesondere zum Zwecke der Kühlung der inneren Elektrode - ringförmig gestaltet sein. Ohne Einschränkung des allgemeinen Erfindungsgedankens ist ebenso eine Mehrzahl entsprechender teilringförmiger Spiegelabschnitte vorstellbar.

Eine erste Ausführungsart sieht vor, daß der erste Endspiegel in radialer Richtung torusförmig gekrümmt ist und in einem azimutal kleinen Bereich ein Strahlauskopplungsfenster aufweist. Die torusförmige Krümmung stellt sicher, daß der Laserstrahl bei seinem - erfindungsgemäß stets um 180° versetzten - Kreisumlauf den optimalen Radius einhält.

Die Auskopplung des Laserstrahls nach dem vollständigen Kreisumlauf wird in baulich einfacher Weise durch ein Fenster erreicht, das nur einen kleinen Teil des Ringumfangs eines der Spiegel einnimmt.

Eine zweite Ausführungsform sieht vor, daß der erste Endspiegel zur Selektion einer spezifischen azimutalen Strahlneigung bereichsweise, vorzugsweise über zwei sich azimutal gegenüberliegende Bereiche, eine helixförmige Steigung aufweist. Die helixförmige Steigung, durch die der erste Endspiegel ansatzweise die Form eines Spiralbandabschnitts erhält, dient nicht nur zur Erzeugung, sondern vor allem zur Bevorzugung einer bestimmten azimutalen Steigung der Laserstrahlung; da die Strahlung erfindungsgemäß abwechselnd zwischen zwei Hälften des Ringspaltes hin und her reflektiert wird, ist insbesondere vorgesehen, daß der Laserresonator zwei solcher helixförmiger Spiegelabschnitte aufweist, die sich azimutal gegenüberliegen.

Eine dritte Ausführungsform sieht vor, daß zur Erhöhung der azimutalen Strahlneigung der erste Endspiegel über zwei Halbkreisringabschnitte eine helixförmige Steigung aufweist, und daß dort ein der torusförmigen Krümmung des ersten Endspiegels zugeordneter Scheitelpunktradius mit wachsendem Azimutalwinkel abnimmt. Bei dieser Ausführungsform, gemäß der der erste Spiegel über seinen ganzen Umfang eine azimutale Steigung besitzt, nimmt die azimutale Steigung der Strahlung während des halben Kreisumlaufs bis zur Austritt aus dem Strahlauskopplungsfenster kontinuierlich zu. Damit trotz dieser Zunahme die Strahlung in dem vorgesehenen Radius auf den konischen Spiegel trifft, nimmt der Scheitelpunktradius, der die torusförmige Krümmung dieses ersten Spiegels bestimmt, mit wachsendem Azimutalwinkel ab und wirkt so der durch die zunehmende azimutale Steigung der Strahlung bewirkten radial nach außen gerichteten Ablenkung entgegen.

Eine vierte Ausführungsform sieht vor, daß der konische Spiegel zur Selektion einer spezifischen azimutalen Strahlneigung einen auf einen dem torusförmig gekrümmten ersten Endspiegel zugeordneten Scheitelpunktradius abgestimmten Öffnungswinkel besitzt. Dies hat den Vorteil, daß anstelle eines ganz oder teilweise helixförmig ansteigenden und somit fertigungstechnisch komplizierten ersten Endspiegels ein lediglich torusförmig gekrümmter Spiegel verwendet werden kann. Die angesichts des Ringumlaufs erforderliche Strahlführung erfolgt durch eine Anpassung des öffnungswinkels des konischen Spiegels an den Scheitelpunktradius des torusförmigen ersten Spiegels. Während bei einer verschwindenden azimutalen Steigung der Strahlung, bei der sie zwischen zwei gegenüberliegenden Bereichen des kreisringförmigen Querschnitts lediglich pendeln würde, ohne azimutal umzulaufen, ein Öffnungswinkel von exakt 45° erforderlich wäre, ist erfindungsgemäß vorgesehen, die tatsächlich endliche azimutale Steigung der Strahlung durch einen davon etwas abweichenden Öffnungswinkel auszugleichen.

Eine fünfte Ausführungsform sieht vor, daß zur Erhöhung der azimutalen Strahlneigung der konische Spiegel über zwei Halbkreisringabschnitte einen azimutal variierenden, auf die Form des ersten Endspiegels abgestimmten Öffnungswinkel besitzt. Dadurch wird insbesondere in Verbindung mit der dritten Ausführungsform die azimutal zunehmend stärker ansteigende Strahlung auf einem konstanten Radius gehalten.

Eine sechste Ausführungsform sieht ein an einem Resonatorende angebrachtes, gegenüber dem Strahlauskopplungsfenster azimutal geringfügig versetztes erstes Halteelement vor, das zur mechanischen Elektrodenstabilisierung und gegebenenfalls zur Selektion einer spezifischen Umlaufrichtung der Laserstrahlung dient. Durch den konischen Spiegel, der eine Reflexion der Strahlung durch die senkrecht zur optischen Achse befindliche Kreisebene, und zwar aus allen Richtungen, bewirkt, kann die innere Elektrode nur am gegenüberliegenden Ende auf der Seite des ersten Spiegels befestigt werden. Durch das Strahlauskopplungsfenster jedoch entsteht auf der Seite des konischen Spiegel ein azimutal nur geringfügig versetzter Schattenbereich, in dem die innere Elektrode ohne Beeinträchtigung des Strahlengangs durch einen Stabilisator o.ä. gehalten und mit der äußeren Elektrode verbunden werden kann. Der Stabilisator besteht typischerweise aus Keramik oder einem sonstigen, nicht leitenden Material.

Eine weitere Ausführungsform sieht ein zweites Halteelement vor, das dem ersten azimutal gegenüberliegend angeordnet ist. Während bei herkömmlichen Resonatoren, bei denen der Strahl den ringförmigen Querschnitt ohne ständige Spiegelung um 180° einmal vollständig umläuft, bevor er auf dem Auskopplungsfenster tritt, eine solche Stabilisierung der inneren Elektrode auf der Seite des konischen Spiegels aus beiden Richtungen nicht möglich ist, ermöglicht gerade der erfindungsgemäße konische Spiegel diese azimutal beidseitige Befestigung, da die azimutalen Umlaufpositionen gegenüber dem Austrittsfenster und 180° dazu verdreht im Verlauf des Strahlengangs unmittelbar nacheinander durchlaufen werden (würden).

Eine weitere Ausführungsform sieht vor, daß die Elektroden in unmittelbarem Kontakt mit dem Resonatorvolumen stehen. Dies dient der vorteilhaften Kühlung des Resonatorvolumens von innen und außen, da die metallischen Elektroden auch thermisch leitend sind.

Eine weitere Ausführungsform sieht vor, daß zur Unterdrückung von Wellenleitermoden die Elektrodenflächen aufgerauht sind. Dadurch wird die Ausbildung von wave guide-Moden unterdrückt zugunsten einer diffusen Streuung der Strahlung an den Elektrodenwänden.

Eine weitere Ausführungsform sieht vor, daß zur Unterdrückung von Wellenleitermoden und von bei einer Hochfrequenzgasentladung im Laserresonator auftretenden Wellenlängeneffekten radial benachbarte Elektroden Abstände von einigen Millimetern bis Zentimetern aufweisen. Der gegenüber herkömmlichen Kreisringdurchmessern von 1 bis 2 Millimetern vergrößerte Abstand zwischen Elektroden begünstigt zusätzlich die freie Propagation der Wellen gegenüber einer durch die Elektrodenwände geführten Strahlung.

Eine weitere Ausführungsform des Laserresonators sieht vor, daß er einfach oder mehrfach gefalten ist und Faltungsspiegel in entsprechender Anzahl aufweist. Wie bereits vorstehend erwähnt, ermöglicht erst der konische Endspiegel den Einsatz zusätzlicher optischer Elemente wie Faltungsspiegel, da Justierungsungenauigkeiten durch den konischen Spiegel, der einen entstandenen radialen Versatz durch Rückreflexion unter gleichem Winkel ausgleicht, behoben werden.

Eine weitere Ausführungsform sieht weitere erste und zweite Halteelemente innerhalb der gefaltenen Bereiche des Resonatorvolumens vor. Da die Strahlung erst kurz vor dem Austritt durch das Auskopplungsfenster die Bereiche sämtlicher Faltungszylinder gleichen oder um 180° versetzten Azimutalwinkels durchquert und - vom Austrittsfenster ausgehend - im Resonatorvolumen fortgesetztem Strahlengang in allen Faltungszylindem entsprechende Schattenbereiche entstehen, ist im Bereich des konischen Spiegels eine beidseitige und damit in allen Betriebslagen des Lasers stabile Befestigung sämtlicher ineinander befindlicher Elektroden möglich.

Eine weitere Ausführungsform des Laserresonators sieht vor, daß er 2n-fach gefaltet ist und die äußerste Elektrode geerdet ist. Im Falle einer geradzahligen Anzahl von Faltungen ist es möglich und empfehlenswert, die Außenelektrode auf Masse zu legen und so die Arbeitssicherheit zu erhöhen.

Eine weitere Ausführungsform sieht vor, daß der Resonator in azimutaler Richtung instabil ist. Während in radialer Richtung durch den begrenzten Spaltabstand eine ausreichende Strahlkohärenz gewährleistet ist, besteht in azimutaler Richtung entsprechend einer höheren Fresnelzahl die Gefahr von Multioszillationen, sofern ein in azimutaler Richtung stabiler Resonator verwendet wird. Die azimutale Instabilität des Resonators dient deshalb zur Modendiskriminierung und damit zur Verbesserung der Strahlqualität.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:
- Fig. 1a: einen Längsschnitt durch ein erstes Ausführungsbeispiel eines erfindungsgemäßen Laserresonator und eine Aufsicht auf den Frontspiegel,
- Fig. 1b: perspektivisch den Strahlweg,
- Fig. 1c: einen Querschnitt bei I-I in Fig. 1a,
- Fig. 1d: perspektivisch das erste Ausführungsbeispiel in einer praktischen Realisierung,
- Fig. 2a-d: Darstellungen zur Erläuterung der Ausbildung des Frontspiegels,
- Fig. 3a-c: Darstellungen zur Erläuterung der Ausbildung des Frontspiegels bei einer Abwandlung, und
- Fig. 4: einen Längsschnitt durch ein zweites Ausführungsbeispiel mit einem einfach gefalteten erfindungsgemäßen Resonator,

### Beschreibung von Ausführungsbeispielen

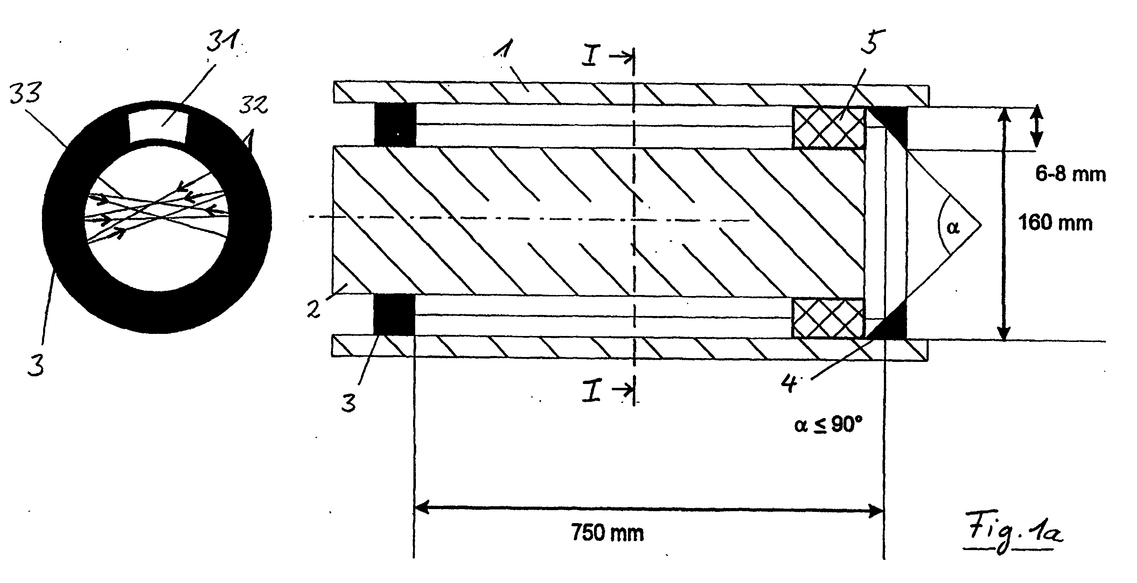

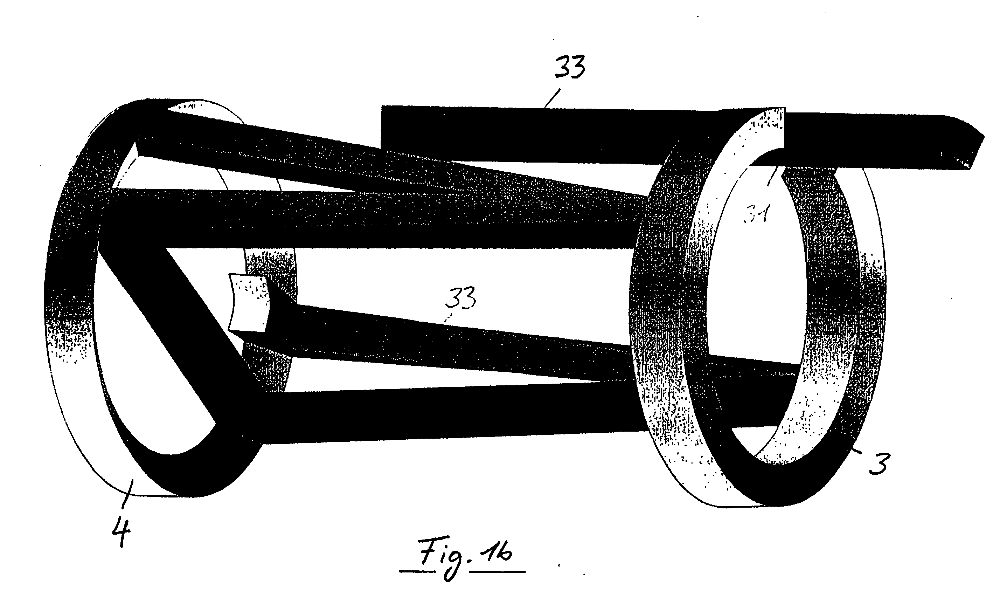

Fig. 1 zeigt ein erstes Ausführungsbeispiel eines erfindungsgemäßen Resonators mit einer kreiszylindrischen Außenelektrode 1 und einer darin befindlichen ebenfalls kreiszylindrischen Innenelektrode 2. Eine der beiden Elektroden - bevorzugt die Außenelektrode - kann geerdet sein. Mit S ist die Symmetrieachse des Resonators bezeichnet.

Der Laserresonator weist zwei Endspiegel 3 und 4 auf. Der Endspiegel 3, der im folgenden auch als Frontspiegel bezeichnet wird, ist bei dem in Fig. 1 gezeigten Ausführungsbeispiel in azimutaler Richtung derart gestaltet, daß der Strahl in dem ringförmigen Zwischenraum zwischen den beiden Elektroden umläuft. Mögliche Ausbildungen des Frontspiegels, mit denen dies erreicht wird, werden im folgenden noch erläutert. Mit 31 ist eine Auskoppelöffnung bzw. ein Auskoppelfenster in dem Endspiegel 3 bezeichnet. Durch dieses Fenster tritt der Laserstrahl aus.

Der auf der gegenüberliegenden Seite vorgesehene Endspiegel 4, der im folgenden auch als Rückspiegel bezeichnet wird, ist konisch mit einem Konuswinkel α ≤ 90° ausgebildet. Der Spiegel 4 lenkt die Laserstrahlung in einen gegenüberliegenden azimutalen Bereich um. Von dort wird die Laserstrahlung wieder auf den Frontspiegel 3 zurück reflektiert.

Die in Fig. 1a gezeigte Aufsicht auf den Frontspiegel 3 zeigt die verschiedenen Strahlauftreffpunkte 32 eines einzelnen Strahlenbündels sowie den Strahlweg 33 zwischen den verschiedenen Strahlauftreffpunkten 32, die sich aufgrund der erfindungsgemäßen Anordnung des Spiegels 4 ergeben.

Die in Fig. 1a angegebenen Maße sind exemplarisch und beschränken die Erfindung nicht.

Fig. 1b zeigt den Strahlweg zwischen den Spiegeln 3 und 4 perspektivisch. Dabei ist zu beachten, daß bei der Darstellung in Fig. 1b der Spiegel 3 auf rechten Seite angeordnet ist, während er in Fig. 1a auf der linken Seite angeordnet ist. Ansonsten sind gleiche Teile mit denselben Bezugszeichen versehen, so daß auf eine erneute Erläuterung verzichtet werden kann. Ausdrücklich soll jedoch darauf hingewiesen werden, daß in Fig. 1b aus Gründen der Darstellung die Elektroden 1 und 2 nicht gezeigt sind.

Zwischen den Elektroden 1 und 2 befinden sich azimutal gegenüberliegend zwei Stabilisatoren 5. Die Stabilisatoren 5, die aus einem isolierenden Material und insbesondere aus einem keramischen Material bestehen, halten die Innenelektrode 2 auf der Seite des konischen Rückspiegels 4 relativ zur Außenelektrode 1. Bevorzugt ist ein Stabilisator 5 in unmittelbarer Nähe der Auskoppelöffnung 31 angeordnet. Bei dieser Anordnung "stören" die beiden Stabilisatoren den im Resonator umlaufenden Strahl praktisch nicht. Durch die bei einer bevorzugten Weiterbildung der Erfindung vorgesehenen Stabilisatoren wird die Justierunempfindlichkeit des erfindungsgemäßen Laserresonators stark erhöht.

Fig. 1c zeigt einen Querschnitt durch den erfindungsgemäßen Laserresonator bei I-I in Fig. 1a. Wie Fig. 1c zu entnehmen ist, nimmt das Auskoppelfenster 31 einen in azimutaler Richtung kleinen Bereich des von den Elektroden 1 und 2 eingeschlossenen Resonatorvolumens 6 mit kreisringförmigen Querschnitt ein. Weiterhin zeigt Fig. 1c, daß ein Stabilisator 5 direkt azimutal benachbart zu dem Auskoppelfenster 31 angeordnet ist. Direkt gegenüberliegend befindet sich auf der Seite des konischen Ringspiegels 4 der weitere Stabilisator 5. Damit sind die beiden Stabilisatoren 5 in den Schattenbereichen des Austrittsfensters 31 angeordnet.

Fig. 1d zeigt in einer perspektivischen Darstellung eine praktische Ausführungsform eines erfindungsgemäßen Laserresonators, wobei die einzelnen Teile mit den selben Bezugszeichen wie in den Figuren 1a bis 1c bezeichnet sind. Deshalb wird auf eine detaillierte Darstellung dieser Figur verzichtet.

Bezüglich der Auswahl einer bestimmten azimutalen Strahlneigung werden nachstehend drei Ausführungsarten beispielhaft genannt:

Im ersten Fall ist der Frontspiegel 3 rein torisch und besitzt keine azimutale Steigung. In diesem Fall müssen Scheitelpunktradius des Frontspiegels und Neigung des konischen Rückspiegels so aufeinander angepaßt sein, daß sie dieselbe azimutale Strahlneigung bevorzugen. Moden mit dieser Strahlneigung sind dann Eigenmoden des Resonators. Um zusätzlich zu dieser zweifachen Modendiskriminierung auch noch eine spezielle Umlaufrichtung auszuwählen, werden Stabilisatoren dem Austrittsfenster azimutal direkt benachbart und/oder dazu um 180° versetzt angeordnet.

Im zweiten Fall weist der Frontspiegel zur Erzeugung der Stahlneigung über einen, ggf. einen weiteren azimutal gegenüberliegenden Bereich einen helixförmig ansteigenden Bereich auf.

Im dritten Fall besitzt der Frontspiegel eine durchgehende azimutale Steigung, insbesondere über zwei halbringförmige Bereiche. Dem durch die zunehmende azimutale Strahlneigung anwachsenden radialen Versatz nach außen wirkt der azimutal abnehmende Scheitelpunktradius des Frontspiegels entgegen.

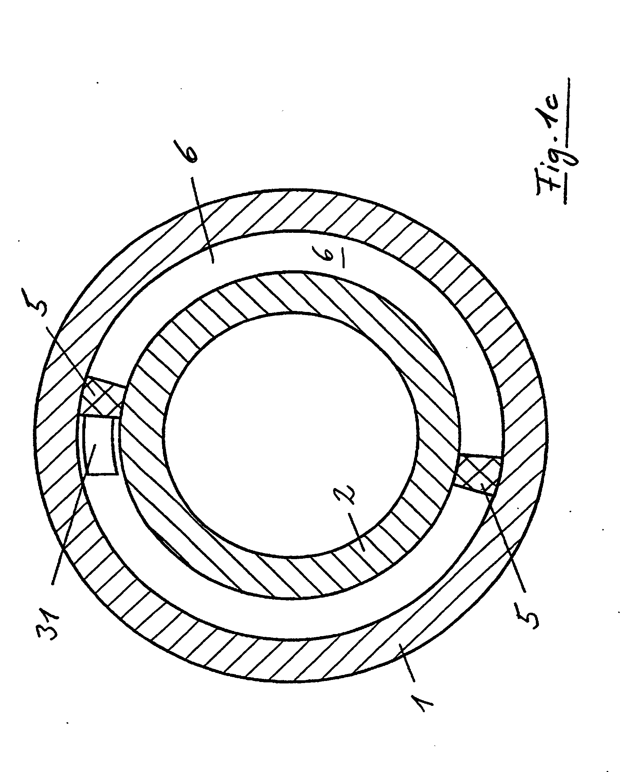

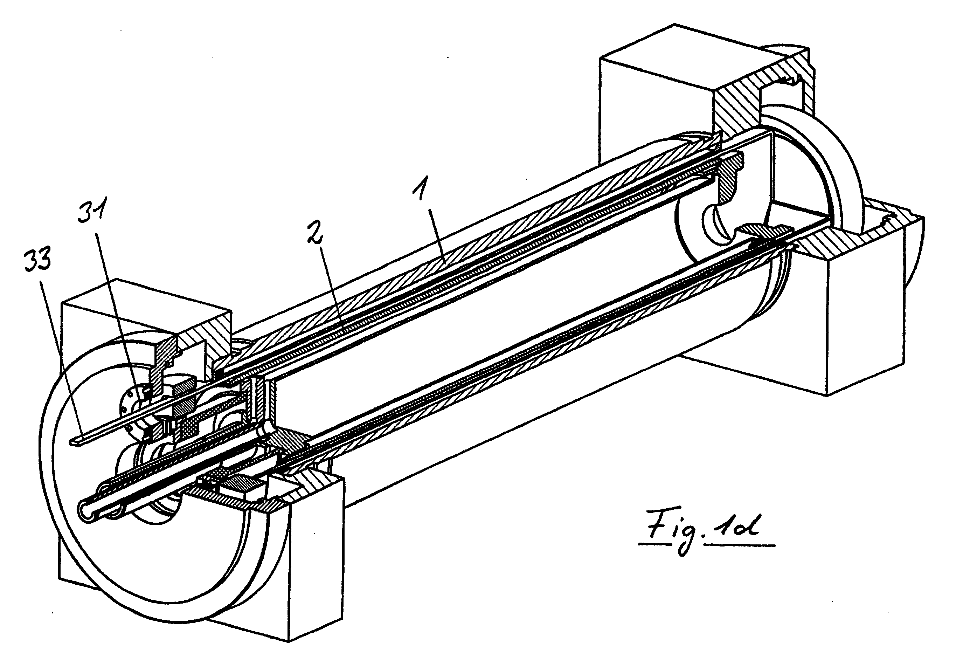

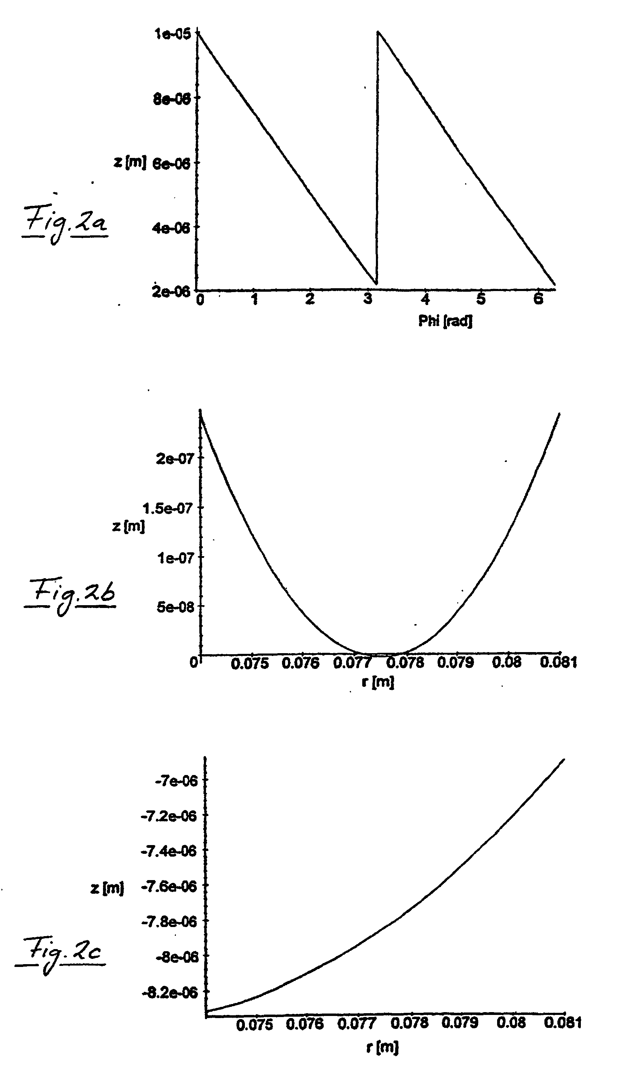

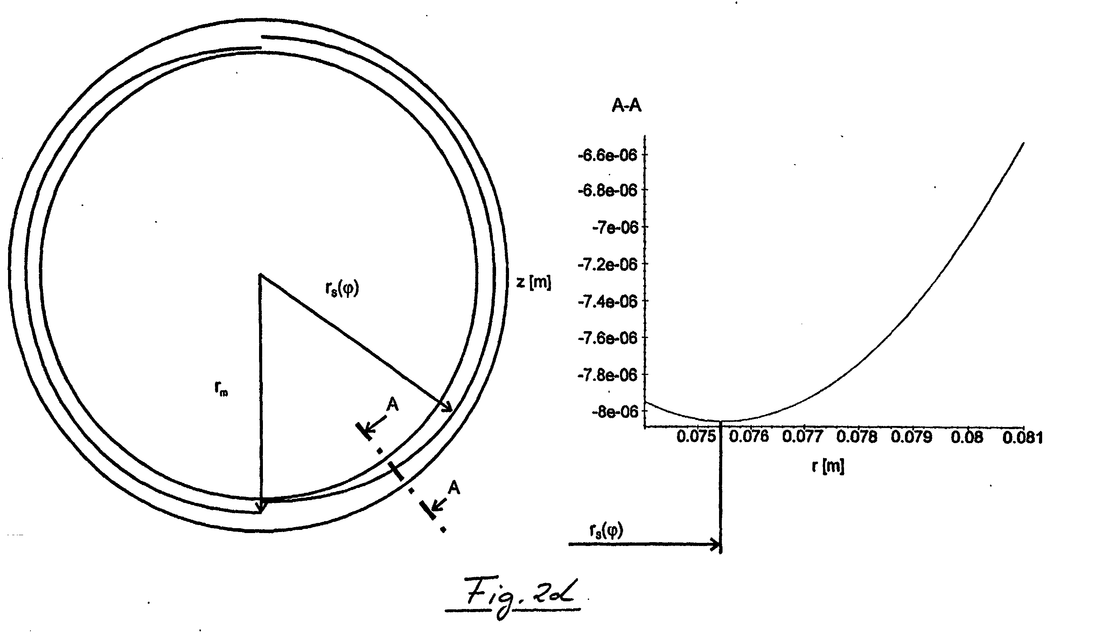

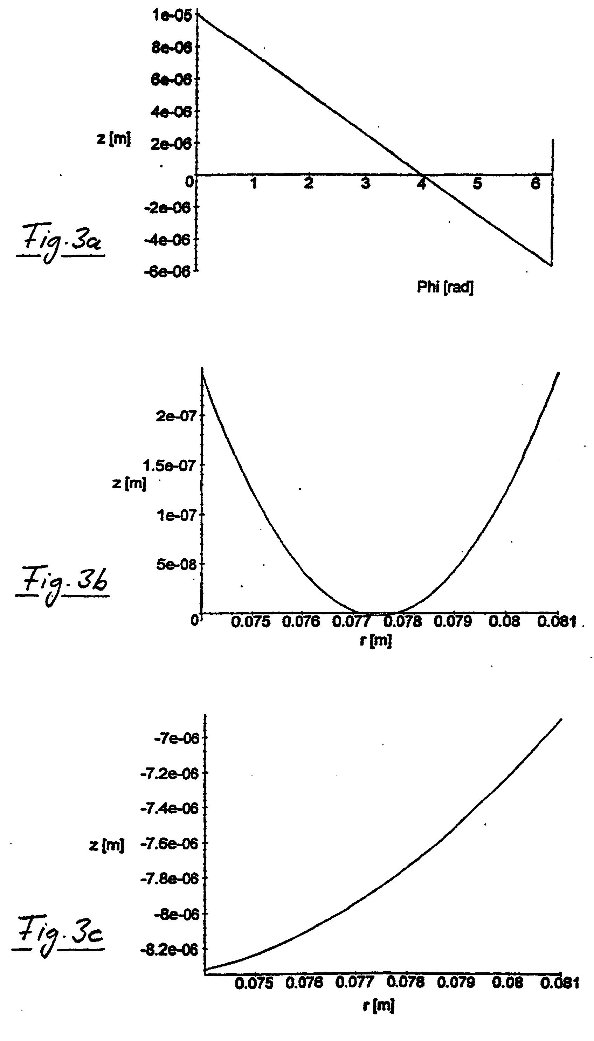

Die Fig. 2a bis 2c und 3a bis 3c zeigen in einer sogenannten Pfeilhöhendarstellung die Spiegelkontur für den dritten Fall. Die Pfeilhöhe z gibt den Abstand eines Punktes mit der jeweils auf der Abszisse angegebenen Koordinate von einer Ebene an, die den Spiegel in einem festgelegten Punkt berührt:
Fig. 2a zeigt die Pfeilhöhe z (in m) als Funktion des azimutalen Winkels Phi (in rad). Wie dieser Fig. zu entnehmen ist, besteht die Spiegelkontur in azimutaler Richtung aus zwei Abschnitten, zwischen denen ein Sprung auftritt, wobei sich die Pfeilhöhe in jedem Abschnitt linear ändert. Wie Fig. 2a zu entnehmen ist, nimmt die Pfeilhöhe bei einem Umlauf über den Frontspiegel 3 in azimutaler Richtung durch die helixförmige Steigung zweimal stetig ab und springt nach einer halben Drehung wieder auf ihren Maximalwert.

Fig. 3a zeigt eine Alternative, bei der die azimutale Steigung sich über den gesamten Umlauf linear ändert und anschließend wieder auf den Maximalwert springt.

Die Fig. 2b und 3b zeigen die Pfeilhöhe z (in m) als Funktion des Radius r (in m) für den azimutalen Winkel Phi = 0 und Phi = π + 0,01, während die Fig. 3c und 3d die entsprechende Pfeilhöhe z für die Winkel Phi = π und Phi = 2*π als Funktion des Radius r zeigen.

Fig. 2d zeigt den Verlauf des Scheitelpunktradius rₛ(φ). Der Scheitelpunktradius wandert während des Umlaufs mit wachsender azimutaler Strahlneigung zunehmend in Richtung der Symmetrieachse , während gleichzeitig der Öffnungswinkel des konischen Spiegels abnimmt.Mit rₘ ist der Radius der Mitte des Spiegels bezeichnet. Im rechten Teil der Fig. 2d ist die Pfeilhöhe z als Funktion des Radius r im Schnitt A-A dargestellt.

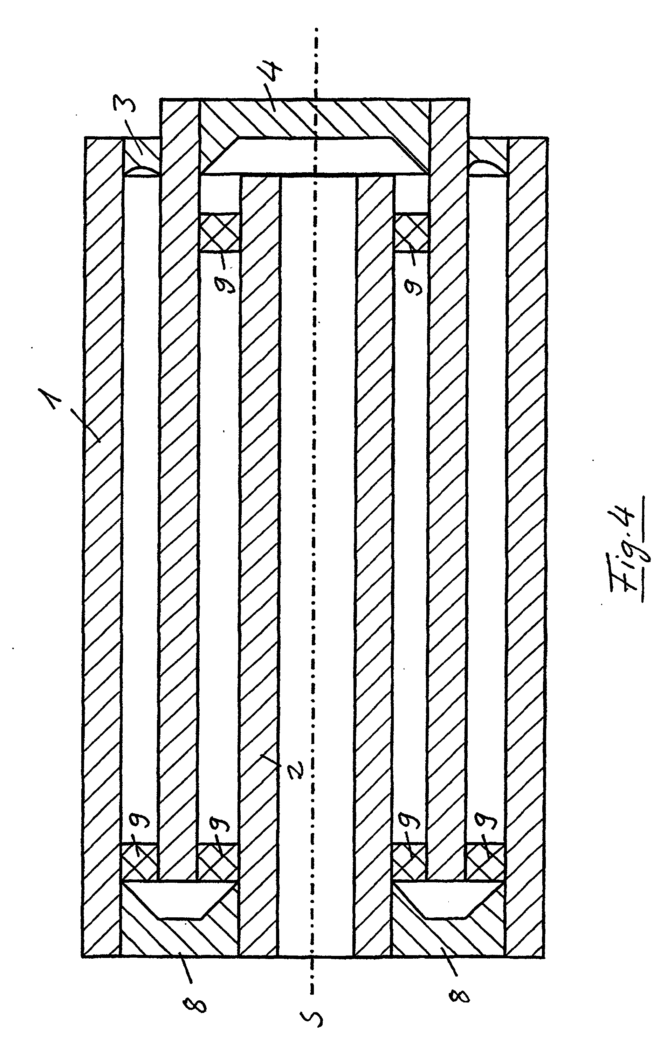

Fig. 4 zeigt ein weiteres Ausführungsbeispiel, bei den der Laseresonator einfach gefaltetet ist. Dabei sind gleiche Teile mit den selben Bezugszeichen versehen. Zusätzlich sind zwei Faltungsspiegel 8 vorgesehen, der die Strahlung vom Frontspiegel 3 zum am gleichen Ende befindlichen konischen Ringspiegel 4 reflektiert. Die Ziffern 9 geben die bei dieser Ausführungsform vorliegenden Schattenbereiche und somit die möglichen Positionen von keramischen Stabilisatoren an. Diese Positionen können auch nur teilweise mit Stabilisatoren bestückt werden. Die mittlere Elektrode 10 ist in diesem Fall geerdet, während die innere und die äußere Elektrode 11, 12 mit einer hochfrequenten Wechselspannung versorgt werden.

Analog zu diesem Ausführungsbeispiel sind weitere Faltungszylinder denkbar.

In jedem Falle hat der erfindungsgemäßen Laserresonator eine Reihe von Vorteilen:
Mit dem erfindungsgemäßen Laseresonator sind Laser hoher Leistung aufgrund der Qualität der Diffusionskühlung realisierbar, die durch den unmittelbaren Kontakt metallischer Elektroden mit dem Gasraum erzielt wird, wobei ohne Beschränkung des Er findungsgedankens beispielsweise ein Ringspalt konstanter Dicke unterhalb eines Zentimeters eingehalten wird.

Die Verwendung zweier oder mehrerer koaxialer Elektroden führt zu einem hohen elektrisch-optischen Wirkungsgrad bei kompakter Bauform des Resonators.

Die Elektroden sind am Ende des Frontspiegels mit diesem in der Regel über den vollständigen Umfang verbunden. Die am Ende des konischen Spiegels azimutal beidseitigen Stabilisatoren (der Breite von beispielsweise 5 bis 10 mm) ermöglicht eine auch mehrfache Faltung des Resonators zum Durchlaufen mehrerer koaxialer Entladungstrukturen und darüber hinaus den Einsatz und die betriebssichere Lagerung des Lasers in jeder beliebigen räumlichen Orientierung.

## Patentansprüche

1. Laserresonator mit einem ersten und einen zweiten Endspiegel (3,4) und mit koaxialen Elektroden (1,2; 10,11,12), zwischen denen in Richtung einer Symmetrieachse des Laserresonators hin- und herreflektierte Laserstrahlung ein Resonatorvolumen ringförmigen Querschnitts abschnittsweise azimutal instabil und radial stabil, durchläuft
**dadurch gekennzeichnet, daß** der zweite Endspiegel (4) ein kreisförmig, kegelförmig oder ring- bzw. teilring- förmig gestalteter konischer Spiegel mit einem Öffnungswinkel ≦ 45°ist, der auftreffende Laserstrahlung jeweils abstandsgleich von der Symmetrieachse in azimutal gegenüberliegende Bereiche des Resonatorvolumens umlenkt und mit einem den Einfallswinkel gleichenden Ausfallswinkel zurückreflektiert.

2. Laserresonator nach Anspruch 1,
**dadurch gekennzeichnet, daß** der erste Endspiegel in radialer Richtung torusförmig gekrümmt ist und einer der Spiegel in einem azimutal kleinen Bereich ein Strahlauskopplungsfenster aufweist.

3. Laserresonator nach Anspruch 1 oder 2,
**dadurch gekennzeichnet, daß** der erste Endspiegel zur Selektion einer spezifischen azimutalen Strahlneigung bereichsweise eine helixförmige Steigung aufweist.

4. Laserresonator nach Anspruch 1 oder 2,
**dadurch gekennzeichnet, daß** zur Erhöhung der azimutalen Strahlneigung der erste Endspiegel über zwei Halbkreisringabschnitte eine helixförmige Steigung aufweist, und daß dort ein der torusförmigen Krümmung des ersten Endspiegels zugeordneter Scheitelpunktradius mit wachsendem Azimutalwinkel abnimmt.

5. Laserresonator nach Anspruch 2,
**dadurch gekennzeichnet, daß** der konische Spiegel zur Selektion einer spezifischen azimutalen Strahlneigung einen auf einen dem torusförmig gekrümmten ersten Endspiegel zugeordneten Scheitelpunktradius abgestimmten Öffnungswinkel besitzt.

6. Laserresonator nach Anspruch 1 oder 4,
**dadurch gekennzeichnet, daß** zur Erhöhung der azimutalen Strahlneigung der konische Spiegel über zwei Halbkreisringabschnitte einen azimutal variierenden, auf die Form des ersten Endspiegels abgestimmten Öffnungswinkel besitzt.

7. Laserresonator nach einem der Ansprüche 1 bis 6,
**gekennzeichnet durch** ein an einem Resonatorende angebrachtes, gegenüber dem Strahlauskopplungsfenster azimutal geringfügig versetztes erstes Halteelement (5), das zur mechanischen Elektrodenstabilisierung und gegebenenfalls zur Selektion einer spezifischen Umlaufrichtung der Laserstrahlung dient.

8. Laserresonator nach Anspruch 7,
**gekennzeichnet durch** ein zweites Halteelement (5), das dem ersten azimutal gegenüberliegend angeordnet ist.

9. Laserresonator nach einem der Ansprüche 1 bis 8,
**dadurch gekennzeichnet, daß** die Elektroden in unmittelbarem Kontakt mit dem Resonatorvolumen stehen.

10. Laserresonator nach Anspruch 9,
**dadurch gekennzeichnet, daß** zur Unterdrückung von Wellenleitermoden die Elektrodenflächen aufgerauht sind.

11. Laserresonator nach einem der Ansprüche 1 bis 10,
**dadurch gekennzeichnet, daß** zur Unterdrückung von Wellenleitermoden und von bei einer Hochfrequenzgasentladung im Laserresonator auftretenden Wellenlängeneffekten radial benachbarte Elektroden Abstände von mindestens zwei Millimetern bis zwei Zentimetern aufweisen.

12. Laserresonator nach einem der Ansprüche 1 bis 11,
**dadurch gekennzeichnet, daß** er einfach oder mehrfach gefalten ist und Faltungsspiegel (8) in entsprechender Anzahl aufweist.

13. Laserresonator nach Anspruch 12,
**gekennzeichnet durch** weitere erste und zweite Halte- elemente (9) innerhalb der gefaltenen Bereiche des Resonatorvolumens.

14. Laserresonator nach Anspruch 12 oder 13,
**dadurch gekennzeichnet, daß** er 2n-fach gefaltet ist und die äußerste Elektrode (12) geerdet ist.

15. Laserresonator nach einem der Ansprüche 1 bis 14,
**dadurch gekennzeichnet, daß** der Resonator in azimutaler Richtung instabil ist.

16. Laserresonator nach einem der Ansprüche 1 bis 15,
**dadurch gekennzeichnet, daß** beide Endspiegel ringförmig ausgebildet sind.

## Claims

1. Laser resonator having a first and a second end mirror (3, 4) and having coaxial electrodes (1, 2; 10, 11, 12) between which laser radiation reflected back and forth in the direction of an axis of symmetry of the laser resonator passes through a resonant cavity of annular cross-section, section by section, azimuthally unstably and radially stably,
**characterised in that** the second end mirror (4) is a conical mirror formed in a circular, tapering or annular/partially annular shape and having an aperture angle ≤ 45°, which mirror diverts impinging laser radiation in each case equidistantly from the axis of symmetry to azimuthally opposite regions of the resonant cavity and reflects it back at an angle of emergence equal to the angle of incidence.

2. Laser resonator according to claim 1,
**characterised in that** the first end mirror is toroidally curved in the radial direction and one of the mirrors has a beam decoupling window in an azimuthally small region.

3. Laser resonator according to claim 1 or 2,
**characterised in that**, for selection of a specific azimuthal beam inclination, the first end mirror has, in regions, a helical pitch.

4. Laser resonator according to claim 1 or 2,
**characterised in that**, for increasing the azimuthal beam inclination, the first end mirror has a helical pitch over two semi-annular sections and, there, a peak radius associated with the toroidal curvature of the first end mirror decreases as the azimuthal angle increases.

5. Laser resonator according to claim 2,
**characterised in that**, for selection of a specific azimuthal beam inclination, the conical mirror has an aperture angle that is matched to a peak radius associated with the toroidally curved first end mirror.

6. Laser resonator according to claim 1 or 4,
**characterised in that**, for increasing the azimuthal beam inclination, the conical mirror has, over two semi-annular sections, an azimuthally varying aperture angle that is matched to the shape of the first end mirror.

7. Laser resonator according to any one of claims 1 to 6,
**characterised by** a first holding element (5) which is provided at one end of the resonator and is slightly offset azimuthally in relation to the beam decoupling window and which serves for mechanical electrode stabilisation and, where applicable, for selection of a specific circulation direction of the laser radiation.

8. Laser resonator according to claim 7,
**characterised by** a second holding element (5) which is arranged azimuthally opposite the first.

9. Laser resonator according to any one of claims 1 to 8,
**characterised in that** the electrodes are in direct contact with the resonant cavity.

10. Laser resonator according to claim 9,
**characterised in that**, for suppression of waveguide modes, the electrode surfaces are roughened.

11. Laser resonator according to any one of claims 1 to 10,
**characterised in that**, for suppression of waveguide modes and of wavelength effects which occur in the case of a high-frequency gas discharge in the laser resonator, radially adjacent electrodes are spaced apart by from at least two millimetres to two centimetres.

12. Laser resonator according to any one of claims 1 to 11,
**characterised in that** it is folded one or more times and has a corresponding number of folding mirrors (8).

13. Laser resonator according to claim 12,
**characterised by** further first and second holding elements (9) inside the folded regions of the resonant cavity.

14. Laser resonator according to claim 12 or 13,
**characterised in that** it is folded twice and the outermost electrode (12) is earthed.

15. Laser resonator according to any one of claims 1 to 14,
**characterised in that** the resonator is unstable in the azimuthal direction.

16. Laser resonator according to any one of claims 1 to 15,
**characterised in that** both end mirrors are annular.

## Revendications

1. Résonateur laser comportant un premier et un deuxième miroir terminal (3, 4) et des électrodes coaxiales (1, 2; 10, 11, 12) entre lesquelles le rayonnement laser alternativement réfléchi dans la direction d'un axe de symétrie du résonateur laser parcourt, par sections, de manière instable en direction azimutale et stable en direction radiale, un volume de résonateur de section annulaire,
**caractérisé par le fait que** le deuxième miroir terminal (4) est un miroir conique de forme circulaire, conique, annulaire ou partiellement annulaire, ayant un angle d'ouverture ≤ 45° qui dévie le rayonnement laser incident à égale distance de l'axe de symétrie dans des zones azimutalement opposées du volume de résonateur et le réfléchit selon un angle égal à l'angle d'incidence.

2. Résonateur laser selon la revendication 1,
**caractérisé par le fait que** le premier miroir terminal est incurvé en forme de tore en direction radiale et présente, dans une petite zone azimutale, une fenêtre de découplage de faisceau.

3. Résonateur laser selon la revendication 1 ou 2,
**caractérisé par le fait que** le premier miroir terminal présente par endroits une rampe hélicoïdale pour la sélection d'une inclinaison azimutale spécifique du faisceau.

4. Résonateur laser selon la revendication 1 ou 2,
**caractérisé par le fait que**, pour élever l'inclinaison azimutale du faisceau, le premier miroir terminal présente, sur deux sections d'anneau semi-circulaire, une rampe hélicoïdale où un rayon de sommet correspondant à la courbure toroïdale du premier miroir terminal diminue lorsque l'angle azimutal augmente.

5. Résonateur laser selon la revendication 2,
**caractérisé par le fait que** le miroir conique pour la sélection d'une inclinaison azimutale spécifique du faisceau possède un angle d'ouverture adapté au rayon de sommet correspondant à la courbure toroïdale du premier miroir terminal.

6. Résonateur laser selon la revendication 1 ou 4,
**caractérisé par le fait que**, pour élever l'inclinaison azimutale du faisceau, le miroir conique possède, sur deux sections d'anneau semi-circulaire, un angle d'ouverture variable en azimut, adapté à la forme du premier miroir terminal.

7. Résonateur laser selon l'une des revendications 1 à 6,
**caractérisé par** un premier élément de retenue (5) monté à une extrémité du résonateur, légèrement décalé en azimut par rapport à la fenêtre de découplage du faisceau, qui sert à la stabilisation mécanique des électrodes et, le cas échéant, à la sélection d'un sens de rotation spécifique du rayonnement laser.

8. Résonateur laser selon la revendication 7,
**caractérisé par** un deuxième élément de retenue (5) placé en position azimutalement opposée par rapport au premier.

9. Résonateur laser selon l'une des revendications 1 à 8,
**caractérisé par le fait que** les électrodes sont en contact direct avec le volume de résonateur.

10. Résonateur laser selon la revendication 9,
**caractérisé par le fait que** les surfaces des électrodes sont rendues rugueuses pour supprimer les modes de guide d'ondes.

11. Résonateur laser selon l'une des revendications 1 à 10,
**caractérisé par le fait que** des électrodes radialement voisines sont écartées d'au moins deux millimètres à deux centimètres pour supprimer les modes de guide d'ondes et les effets de longueur d'onde apparaissant dans le résonateur laser lors d'une décharge gazeuse à haute fréquence.

12. Résonateur laser selon l'une des revendications 1 à 11,
**caractérisé par le fait qu'**il est plié une ou plusieurs fois et présente des miroirs de pliage (8) en nombre correspondant.

13. Résonateur laser selon la revendication 12,
**caractérisé par** d'autres premiers et deuxièmes éléments de retenue (9) dans les zones pliées du volume de résonateur.

14. Résonateur laser selon la revendication 12 ou 13,
**caractérisé par le fait qu'**il est plié deux fois et que l'électrode extérieure (12) est mise à la terre.

15. Résonateur laser selon l'une des revendications 1 à 14,
**caractérisé par le fait que** le résonateur est instable en direction azimutale.

16. Résonateur laser selon l'une des revendications 1 à 15,
**caractérisé par le fait que** les deux miroirs terminaux sont de forme annulaire.
